# DEMANDE DE BREVET EUROPEEN

(11) **EP 3 336 345 A1**
(43) Date de publication de la demande: **20.06.2018**
(21) Numéro de dépôt: 17208113.5
(22) Date de dépôt: 18.12.2017
(51) Int. Cl.: F03B 13/18

(54) **COLONNE FLOTTANTE SEMI-SUBMERSIBLE POUR LE SUPPORT D'UN EQUIPEMENT DE RECUPERATION ET DE TRANSFORMATION DU POTENTIEL ENERGETIQUE DE LA HOULE ET PROCEDE DE PILOTAGE D'UNE TELLE COLONNE**

(30) Priorité: 19.12.2016 FR 1662752
(71) Demandeur: Amiel, Pierre Lazare, 84800 l'Isle sur la Sorgue (FR)
(72) Inventeur: Amiel, Pierre Lazare, 84800 l'Isle sur la Sorgue (FR)
(74) Mandataire: Cabinet Beau de Loménie

(57) **Abrégé**

L'invention concerne une colonne flottante semi-submersible (2) pour le support d'un équipement de récupération et de transformation du potentiel énergétique de la houle, comprenant une structure en treillis (4) en partie immergée et destinée à être ancrée au niveau d'une extrémité inférieure sur le fond marin (6) par l'intermédiaire d'un ancrage tendu (8) ajustable en profondeur, des pontons (10) immergés, fixés à la structure en treillis et comportant des ballasts, une salle des machines (14) montée à une extrémité supérieure de la structure en treillis en étant maintenue au-dessus de la surface de la mer, la salle des machines renfermant des moyens de ballastage et de déballastage (18) des ballasts des pontons et des moyens de pilotage dynamique (16) de l'ancrage de la structure en treillis, et un équipement de transformation du potentiel énergétique (20) de la houle monté sur la structure en treillis. L'invention concerne également un procédé de pilotage d'une telle colonne.

## Description

### Arrière-plan de l'invention

La présente invention se rapporte au domaine général de la récupération et transformation du potentiel énergétique de la houle.

Le milieu marin est constamment agité par des phénomènes de grande période (de l'ordre de grandeur de la demi-journée ou de la journée), à savoir les marées qui sont d'origine astronomique, et par des phénomènes de courte période, à savoir la houle et les seiches.

Parmi ces phénomènes, la houle est engendrée par le vent et génère des courants alternatifs très forts lors des tempêtes (pouvant atteindre plusieurs mètres par seconde). Contrairement aux courants de marée, les courants de houle n'affectent principalement que la tranche d'eau de mer située près de la surface (typiquement de 5 à 10m d'épaisseur), leur importance décroissant avec la profondeur.

L'énergie due à ces courants de houle comprend deux composantes, à savoir une composante gravitationnelle (ou énergie potentielle) due au mouvement alternatif de haut en bas de la houle, et une composante horizontale d'énergie cinétique.

Il existe de nombreux systèmes cherchant à récupérer l'énergie de la houle, notamment la composante potentielle, pour la transformer en énergie électrique. En effet, il a été calculé que la puissance de la houle par m² (cumulant l'énergie potentielle et l'énergie cinétique) passe de 126 Watts pour une houle de 1m (et de fréquence 10s) à plus de 4200 Watts pour une houle de 9m (et de fréquence 17s).

Par ailleurs, la puissance potentielle de la houle étant proportionnelle au carré de sa hauteur significative, les systèmes de récupération et de transformation de l'énergie de la houle cherchent à utiliser au maximum cette hauteur significative de la houle. Comme l'énergie cinétique de la houle est maximale dans la partie d'eau de mer située près de la surface, il est également nécessaire de positionner le système de récupération de l'énergie cinétique de la houle aussi proche que possible de la surface de la mer.

La difficulté des systèmes connus de récupération et de transformation de l'énergie des courants de houle réside dans leur capacité à extraire l'énergie des petites, moyennes et grandes houles (allant jusqu'à 9m) tout en étant capable de résister aux vagues des tempêtes (typiquement supérieures à 9m). En effet, en cas de tempête, la hauteur des vagues peut entraîner une détérioration de ces systèmes, notamment du fait qu'ils se situent proches de la surface de la mer. Or, les systèmes connus de récupération de l'énergie de la houle ne permettent pas de récupérer de manière efficace l'énergie potentielle des courants de houle quelle que soit la hauteur de celle-ci, tout en permettant une mise en sécurité en cas de tempête.

### Objet et résumé de l'invention

La présente invention a donc pour but principal de proposer une colonne flottante semi-submersible pour le support d'un équipement de transformation du potentiel énergétique de la houle qui permet de répondre aux exigences précitées.

Conformément à l'invention, ce but est atteint grâce à une colonne flottante semi-submersible pour le support d'un équipement de récupération et de transformation du potentiel énergétique de la houle, comprenant une structure en treillis en partie immergée et destinée à être ancrée au niveau d'une extrémité inférieure sur le fond marin par l'intermédiaire d'un ancrage tendu ajustable en profondeur, des pontons immergés et fixés à la structure en treillis, les pontons comportant des ballasts, une salle des machines montée à une extrémité supérieure de la structure en treillis en étant maintenue au-dessus de la surface de la mer, la salle des machines renfermant des moyens de ballastage et de déballastage des ballasts des pontons et des moyens de pilotage dynamique de l'ancrage de la structure en treillis, et un équipement de récupération et de transformation du potentiel énergétique de la houle monté sur la structure en treillis.

L'invention est remarquable en ce qu'elle propose une colonne flottante semi-submersible qui est ancrée au fond de la mer avec un déplacement vertical quasiment nul par rapport à celui-ci et qui comprend des ballasts pour pouvoir être montée ou descendue verticalement afin de positionner l'équipement de récupération et de transformation du potentiel énergétique de la houle aussi proche que possible de la surface de la mer en fonction de la hauteur significative de la houle. Ainsi, cette colonne permet d'optimiser la récupération de la majeure partie de l'énergie potentielle (et/ou de l'énergie cinétique en fonction de la nature de l'équipement de récupération) de la houle en s'adaptant aux amplitudes très variables de la hauteur significative de la houle. De plus, grâce à la possibilité de déplacer verticalement la colonne selon l'invention par l'intermédiaire de ses ballasts et de son ancrage tendu ajustable, il est possible de mettre en position de sécurité la salle des machines afin de protéger les divers équipements qu'elle renferme.

La colonne flottante semi-submersible selon l'invention est également remarquable en ce qu'elle s'adapte à tout type d'équipement de récupération et de transformation du potentiel énergétique de la houle : par bouée flottante, par turbine à air, ou par hydrolienne immergée. De plus, grâce à son ancrage ajustable en profondeur et à ses pontons à ballasts, la colonne flottante semi-submersible permet de s'affranchir de la profondeur d'eau et du marnage et peut être installée offshore, loin de toute zone de déferlement de la houle.

La salle des machines de la colonne flottante semi-submersible selon l'invention est maintenue en permanence au-dessus de la surface de la mer, ce qui évite les problèmes de fonctionnement des équipements qu'elle renferme dus à la présence d'eau. Cette salle des machines peut d'ailleurs constituer une réserver de flottabilité de la colonne en cas notamment d'erreur de ballastage des pontons. En outre, la position en dehors de la mer de la salle des machines permet l'installation d'équipements susceptibles d'utiliser à la fois la puissance électrique récupérée de la houle et la capacité de refroidissement du milieu marin.

Par actionnement des moyens de déballastage et par relâchement de la profondeur d'ancrage de la colonne, il est également possible de mettre l'équipement de récupération et de transformation du potentiel énergétique de la houle hors de l'eau afin d'en faciliter la maintenance.

De préférence, les pontons immergés présentent une forme profilée de façon à réduire l'action de la houle sur les pontons, et donc sur la tension d'ancrage de la structure en treillis.

La structure en treillis peut comprendre un assemblage de poutres formant un treillis. Quant à l'ancrage ajustable, il peut comprendre des chaînes, des câbles ou des tubes de façon à former une ligne d'ancrage tendue de manière gravitaire ou ancrée dans le fond marin.

La salle des machines peut renfermer en outre un système de conversion électrique, des pompes de transfert, des groupes électriques de secours et des équipements de sécurité et de survie.

Comme indiqué précédemment, l'équipement de récupération et de transformation du potentiel énergétique de la houle peut comprendre une bouée flottante guidée verticalement en un mouvement alternatif de va-et-vient sous l'effet de la houle, la bouée entraînant dans son déplacement une pompe à vérin.

Dans ce cas, la pompe à vérin est de préférence positionnée à l'intérieur de la salle des machines et comprend une tige solidaire de la bouée flottante, ladite bouée flottante étant solidaire d'une autre tige apte à coulisser verticalement au travers d'un guidage inférieur fixé sur la structure en treillis.

Selon une alternative, l'équipement de récupération et de transformation du potentiel énergétique de la houle peut comprendre au moins une turbine à air positionnée à l'intérieur de la salle des machines et ayant une entrée d'air qui s'ouvre sous la salle des machines, et une jupe fixée sous la salle des machines et s'étendant verticalement sous celle-ci sur une hauteur correspondant sensiblement à la hauteur significative de la houle.

Selon une autre alternative, l'équipement de récupération et de transformation du potentiel énergétique de la houle peut comprendre au moins une hydrolienne immergée.

L'invention a également pour objet un procédé de pilotage d'une colonne flottante semi-submersible telle que définie précédemment, comprenant le positionnement vertical de l'équipement de récupération et de transformation du potentiel énergétique de la houle en fonction de la hauteur de la houle par l'ajustement en hauteur de la structure en treillis par rapport au fond marin, par l'activation des moyens de ballastage et de déballastage, et par ajustement de la longueur d'ancrage tendu pour supprimer le pilonnement de la colonne, et, en cas de hauteur de houle trop importante, la mise en sécurité de la salle des machines par déballastage des ballasts des pontons.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en situation d'une colonne flottante semi-submersible selon l'invention ;
- les figures 2A à 2D sont des vues schématiques dans différentes configurations de production d'une colonne flottante semi-submersible selon un mode de réalisation de l'invention pour supporter une bouée flottante utilisée comme équipement de récupération du potentiel énergétique de la houle ;
- la figure 3 est une vue schématique et en perspective d'une colonne flottante semi-submersible selon un autre mode de réalisation de l'invention pour supporter une turbine à air utilisée comme équipement de récupération du potentiel énergétique de la houle ;
- les figures 4A à 4D sont des vues schématiques dans différentes configurations de production de la colonne flottante semi-submersible de la figure 3 ; et
- la figure 5 est une vue schématique d'une colonne flottante semi-submersible selon un autre mode de réalisation de l'invention pour supporter des hydroliennes utilisées comme équipement de récupération du potentiel énergétique de la houle.

### Description détaillée de l'invention

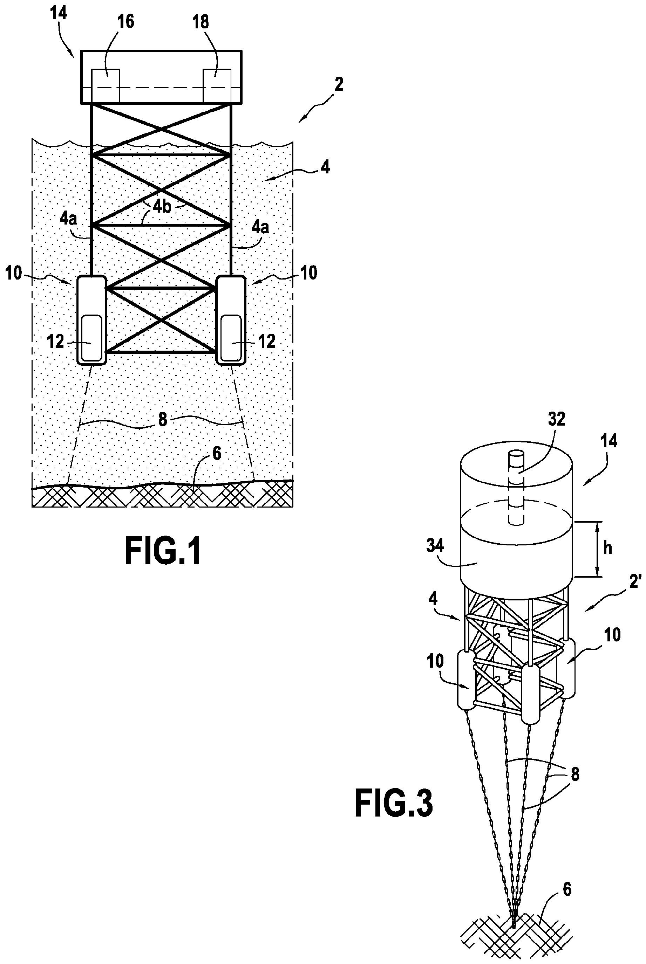

L'invention concerne une colonne flottante semi-submersible utilisée comme support d'un équipement de récupération et de transformation du potentiel énergétique de la houle, telle que la colonne 2 illustrée de façon schématique sur la figure 1.

Cette colonne 2 comprend notamment une structure principale en treillis 4 qui est destinée à être en partie immergée. A titre d'exemple, cette structure en treillis peut être formée par un assemblage entre des poutres métalliques verticales 4a et des poutres métalliques horizontales 4b qui forment un treillis.

Une telle structure en treillis 4 présente l'avantage d'avoir une faible traînée par rapport aux différents mouvements de la mer. Cela rend plus aisée la stabilisation sous l'effet de la houle de la colonne flottante semi-submersible selon l'invention.

La structure en treillis 4 est destinée à être ancrée sur le fond marin 6 (ou sur une barge coulée) par l'intermédiaire d'un ancrage 8 ajustable en profondeur de façon à ce que la colonne n'ait quasiment aucun mouvement vertical par rapport au fond marin et soit hors de l'eau au niveau de sa partie supérieure.

Comme représenté sur l'exemple de la figure 1, l'ancrage 8 peut comprendre des chaînes tendues dont une extrémité est fixée sur le fond marin 6 et une autre extrémité est raccordée au système d'ajustement de la longueur d'ancrage (non représenté) solidaire de la structure en treillis. Alternativement, à la place des chaînes, l'ancrage pourrait comprendre des câbles, des tubes formant une ligne d'ancrage tendu ou tout autre mécanisme équivalent.

Par ailleurs, cet ancrage 8 est ajustable en hauteur, c'est-à-dire que l'on peut piloter la longueur des chaînes selon les besoins. A cet effet, les chaînes de l'ancrage peuvent être reliées en partie supérieure de la structure en treillis à des moyens de pilotage dynamique de l'ancrage permettant d'enrouler et de dérouler les chaînes pour tendre les chaînes et ajuster leur longueur, ces moyens étant avantageusement placés dans la salle des machines décrite ultérieurement.

La colonne flottante semi-submersible 2 selon l'invention comprend également des pontons immergés 10 qui sont fixés à la structure en treillis 4. Par exemple, comme représenté sur la figure 1, ces pontons 10 sont raccordés en partie basse aux poutres métalliques verticales 4a de la structure en treillis.

Les pontons 10 sont en permanence immergés dans l'eau de mer et comportent des ballasts 12, c'est-à-dire des réservoirs destinés, à partir de moyens de ballastage et de déballastage, à être remplis d'eau de mer (on parle de ballastage) ou vidangés (on parle de déballastage).

Plus précisément, les pontons 10 sont profondément immergés de façon à réduire l'action de la houle sur ces derniers (cette action diminuant exponentiellement avec la profondeur) et assurer ainsi une parfaite stabilité de la colonne. En particulier, les pontons 10 ont avantageusement une forme profilée de façon à réduire l'action de la houle sur la tension d'ancrage de la structure en treillis.

De plus, comme il sera décrit ultérieurement, ces pontons 10 ont pour fonction, par l'intermédiaire des ballasts 12, de faire monter ou descendre verticalement la colonne afin de positionner l'équipement de récupération et de transformation du potentiel énergétique de la houle aussi proche que possible de la surface de la mer en fonction de la hauteur significative de la houle.

Dans sa partie supérieure qui est hors de l'eau, la structure en treillis 4 de la colonne supporte une salle des machines 14. Cette dernière est maintenue constamment au-dessus de la surface de la mer de façon à préserver les équipements qu'elle renferme.

Ces équipements comprennent notamment les moyens 16 de pilotage dynamique de l'ancrage de la structure en treillis décrits précédemment. Ces équipements comprennent également un système de production électrique pour obtenir un courant alternatif à fréquence fixe et tension constante à partir du courant issu de l'équipement de récupération du potentiel énergétique de la houle, des pompes de transfert, des groupes électriques de secours, des équipements de sécurité et de survie, etc.

La salle des machines 14 renferme en outre des moyens 18 de ballastage et de déballastage des ballasts 12 équipant les pontons 10. Typiquement, ces moyens comprennent divers pompes pour injecter de l'eau de mer dans les ballasts et des commandes pour actionner une vidange de ces ballasts.

La colonne flottante semi-submersible selon l'invention support également l'équipement de récupération et de transformation du potentiel énergétique de la houle proprement dit qui est monté sur la structure en treillis 4.

En particulier, la colonne flottante semi-submersible selon l'invention présente l'avantage de parfaitement s'adapter à différents types d'équipements de récupération et de transformation du potentiel énergétique de la houle.

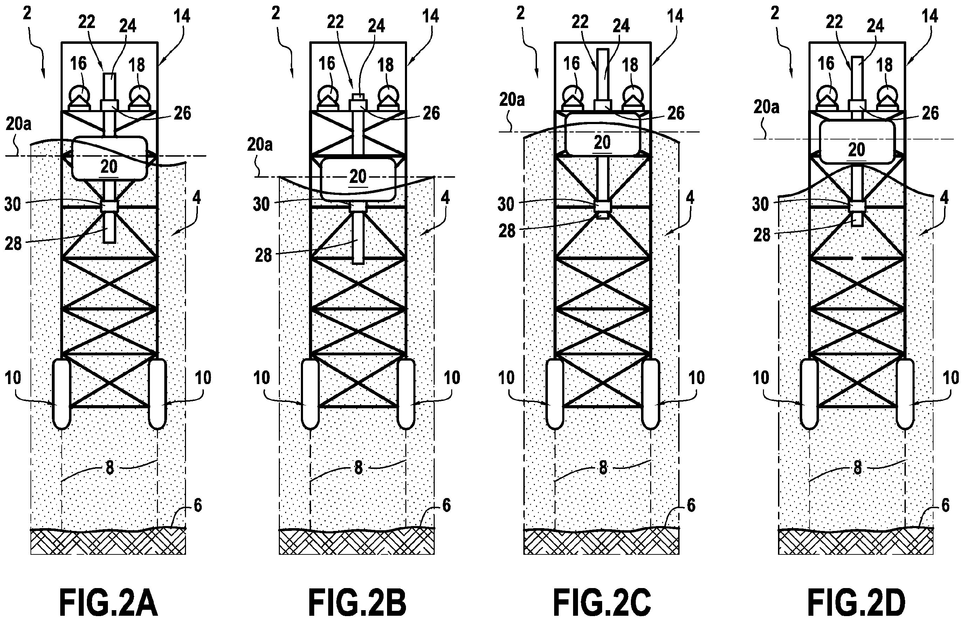

En liaison avec les figures 2A à 2D, on décrira ainsi un premier mode de réalisation de l'invention dans lequel l'équipement de récupération et de transformation du potentiel énergétique de la houle est du type à bouée flottante.

Dans ce premier mode de réalisation, l'équipement de récupération et de transformation du potentiel énergétique de la houle comprend une bouée flottante 20 qui est guidée verticalement en un mouvement alternatif de va-et-vient sous l'effet de la houle, la bouée entraînant dans son déplacement une pompe à vérin 22, de préférence une pompe à vérin hydraulique à double effet.

De façon plus précise, la pompe à vérin 22 est positionnée à l'intérieur de la salle des machines et comprend une tige 24 qui traverse un guidage supérieur 26 et est solidaire de la bouée flottante 20, cette dernière étant elle-même solidaire d'une autre tige 28 apte à coulisser verticalement au travers d'un guidage inférieur 30 fixé sur la structure en treillis 4.

Le fonctionnement de cet équipement de récupération et de transformation du potentiel énergétique de la houle est le suivant.

La bouée flottante 20 qui se déplace verticalement dans un mouvement alternatif sous l'influence du mouvement de la houle va entraîner un déplacement alternatif vertical de la tige 24 de la pompe à vérin 22, le corps de cette dernière restant fixe par rapport à la bouée flottante (car fixé à la salle des machines). En d'autres termes, tout mouvement de la bouée sous l'influence de la houle provoque un déplacement de la tige 24 dans le corps de pompe.

Lorsque la pompe à vérin 20 fournit de l'énergie sous l'effet du déplacement vertical ascendant de sa tige 24, la pression de fluide hydraulique à l'intérieur du corps de pompe augmente, créant une force verticale descendante qui pousse la bouée vers le bas. En réaction, celle-ci s'enfonce dans la mer et est soumise à une poussée d'Archimède correspondant au volume d'eau déplacé.

De même, lorsque la houle descend, la bouée flottante suit son mouvement, la pression de fluide hydraulique à l'intérieur du corps de pompe augmente du fait du déplacement descendant de sa tige 24, créant une force verticale ascendante. En réaction, la bouée a tendance à déjauger, l'énergie produite étant alors limitée au poids de la bouée diminué de la poussée d'Archimède de son tirant d'eau.

En d'autres termes, lorsque la bouée flottante est en phase de montée, c'est la valeur du volume d'eau déplacé qui assure le transfert de l'énergie de la houle. En phase de descente, c'est l'énergie constituée par le poids de la bouée diminuée de la poussée d'Archimède lié à son tirant d'eau qui est transmise (la bouée déjauge). Ainsi, lorsque la bouée flottante va se déplacer au rythme du mouvement alternatif de la houle, le fluide hydraulique présent dans le corps de pompe va fournir une énergie à un moteur hydraulique qui entrainera un alternateur (non représenté sur les figures) produisant de l'énergie électrique.

On notera que la distance entre le guidage supérieur 26 et le guidage inférieur 30 diminuée de la hauteur de la bouée flottante 20 est l'une des caractéristiques de dimensionnement de la colonne flottante semi-submersible. En effet, cette distance correspond à la hauteur significative de la houle maximum que la bouée flottante peut accepter.

On notera également que la position de la bouée flottante 20 entre le guidage supérieur 26 et le guidage inférieur 30 est ajustée par ballastage de la colonne et ajustement de son ancrage en fonction de la hauteur significative de la houle, du poids de la bouée et du marnage de manière à maximiser le rendement énergétique du mouvement de la bouée.

En pratique, la bouée flottante 20 est placée en position de repos (figure 2A) pour laquelle son axe central 20a se confond avec le niveau moyen de la vague. Lorsque la bouée monte (position de crête de la vague de la figure 2B), la récupération d'énergie (dont le principe a été décrit précédemment) est proportionnelle au volume d'eau déplacé par la bouée. En descente (position de creux de la vague illustrée par la figure 2C), la récupération d'énergie est proportionnelle au poids de la bouée diminué de la poussée d'Archimède correspondant au tirant d'eau (déjaugeage de la bouée).

Par ailleurs, une partie de l'énergie de la houle prélevée servant à mettre en mouvement la bouée flottante, le poids de la bouée doit être minimal en cas de houle de faible amplitude et le plus élevé possible en cas de houle de forte amplitude. A cet effet, il peut être avantageusement prévu un système de ballastage de la bouée (non représenté sur les figures) permettant d'adapter le poids de la bouée à la hauteur significative de la houle.

Enfin, comme représenté sur la figure 2D, la bouée flottante 20 de l'équipement de récupération et de transformation du potentiel énergétique de la houle peut être mise en position de sécurité en cas de tempête.

En effet, en cas de tempête et de hauteur de houle trop importante, l'opérateur de la colonne flottante laisse la bouée flottante arriver en position maximum et la bloque dans cette position, puis relève la colonne flottante (par déballastage des pontons 10 et relâchement de l'ancrage 8) de façon à maintenir la salle des machines et la bouée flottante hors d'atteinte des vagues (figure 2D). Ainsi, l'intégrité de la salle des machines et de la bouée flottante peut être préservée.

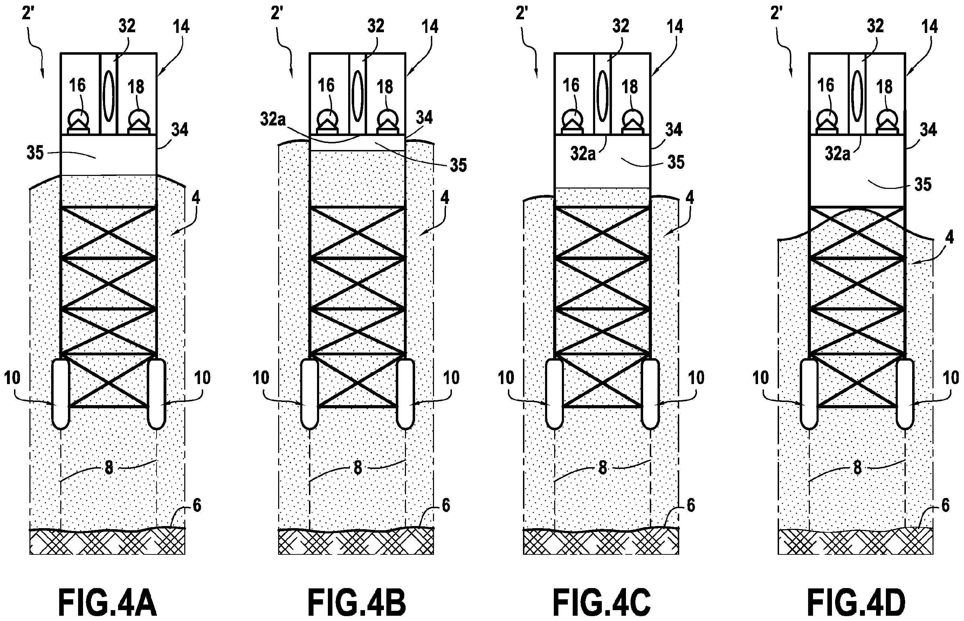

En liaison avec les figures 3 et 4A à 4D, on décrira maintenant un deuxième mode de réalisation de l'invention dans lequel l'équipement de récupération et de transformation du potentiel énergétique de la houle est du type à turbine à air.

Dans ce mode de réalisation, l'équipement de récupération et de transformation du potentiel énergétique de la houle de la colonne flottante semi-submersible 2' comprend au moins une turbine à air 32, de préférence du type à double flux, qui est positionnée à l'intérieur de la salle des machines 14 et qui comprend une entrée d'air 32a qui s'ouvre sous la salle des machines.

La colonne flottante semi-submersible 2' comprend en outre une jupe 34 qui est fixée sous la salle des machines en-dessous de laquelle elle s'étend verticalement sur une hauteur h correspondant sensiblement à la hauteur de la houle.

Le fonctionnement de cet équipement de récupération et de transformation du potentiel énergétique de la houle est le suivant.

La houle provoque un mouvement alternatif de l'air confiné sous la jupe 34, le passage de l'air au travers de l'entrée d'air (et accéléré par effet Venturi) entraînant la turbine à air 32. En d'autres termes, la jupe 34 constitue la chemise d'une pompe à air, l'eau de mer constituant le piston de cette pompe à air. De la sorte, le mouvement alternatif de haut en bas de la houle forme une pompe de type volumétrique.

L'air qui pénètre dans la turbine à air 32 sous l'effet du mouvement vertical de la houle traverse celle-ci alternativement de bas en haut puis de haut en bas en entraînant la turbine, cette dernière entraînant à son tour un alternateur pour fournir de l'énergie électrique.

En pratique, lorsque la jupe 34 de la colonne 2' est placée en position de repos (figure 4A), le niveau de l'eau à l'intérieur de la jupe se confond avec le niveau moyen de la houle. Lorsque la houle monte (figure 4B montrant la position de crête de vague), le niveau de l'eau à l'intérieur de la jupe suit le mouvement (avec un décalage dû à la pression d'air à l'intérieur de la chambre correspondant aux pertes de charge dans la turbine) propulsant l'air vers la turbine à air. Enfin, lorsque la houle baisse (figure 4C montrant la position de creux de vague), la pression à l'intérieur de la chambre devient négative aspirant l'air à travers la turbine à air.

Lorsque la crête de vague atteint son apogée (figure 4B) à l'intérieur de la jupe, un volume d'air résiduel apparait 35 (il dépend de la hauteur de la structure par rapport au fond marin). Un calcul montre que la pression de l'air (et donc du transfert d'énergie) diminue de manière hyperbolique lorsque le volume résiduel augmente. Il conviendra d'optimiser ce volume par ballastage des pontons et ajustement de la tension d'ancrage.

Enfin, comme représenté sur la figure 4D, la jupe 34 de l'équipement de récupération et de transformation du potentiel énergétique de la houle peut être mise en position de sécurité en cas de tempête.

En effet, en cas de tempête et de hauteur de houle trop importante, l'opérateur de la colonne flottante va relever celle-ci au maximum de façon à maintenir la salle des machines et la jupe hors d'atteinte des vagues. Ainsi, l'intégrité de la salle des machines et de la jupe peut être préservée.

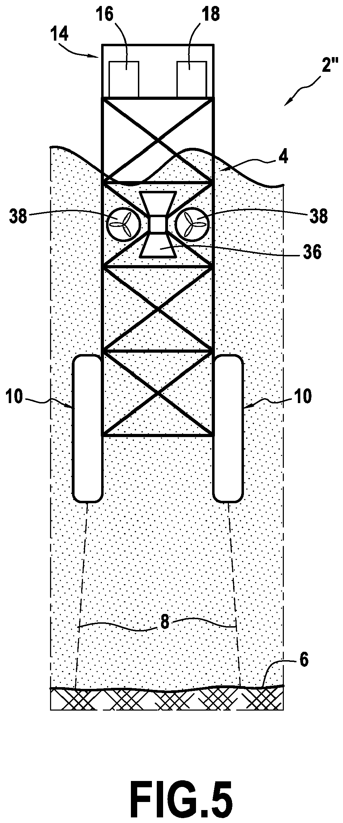

En liaison avec la figure 5, on décrira maintenant un troisième mode de réalisation de l'invention dans lequel l'équipement de récupération et de transformation du potentiel énergétique de la houle est du type à hydrolienne.

Dans ce mode de réalisation, l'équipement de récupération et de transformation du potentiel énergétique de la houle de la colonne flottante semi-submersible 2" comprend au moins une hydrolienne (c'est-à-dire une turbine hydraulique) à double flux 36 positionnée verticalement dans l'eau pour récupérer l'énergie potentielle des courants de houle, et de préférence au moins une hydrolienne à double flux supplémentaire 38 positionnée horizontalement dans l'eau pour récupérer l'énergie cinétique de la houle.

Ces hydroliennes 36, 38 sont fixées à la structure en treillis 4 de la colonne flottante semi-submersible 2" et sont immergées dans l'eau de mer à faible profondeur. Les hydroliennes produisent de l'énergie électrique qui peut être exportée ou utilisée directement par des équipements de la salle des machines 14. En cas de tempête, l'opérateur de la colonne flottante va relever celle-ci au maximum de façon à maintenir la salle des machines et les hydroliennes 36, 38 hors d'atteinte des vagues.

On décrira maintenant le procédé de pilotage de la colonne flottante semi-submersible selon l'invention.

Cette description est faite ci-après à partir du mode de réalisation dans lequel l'équipement de récupération et de transformation du potentiel énergétique de la houle est du type à bouée flottante (figures 2A à 2D). Bien entendu, le même mode opératoire est utilisé pour les deux autres modes de réalisation précédemment décrits.

En l'absence de charge (c'est-à-dire lorsque la colonne est déconnectée du réseau électrique), et en l'absence de tension d'ancrage, la colonne est ballastée (par l'intermédiaire des ballasts des pontons) de manière à ce que l'axe central de la bouée flottante se confonde avec le niveau moyen de la vague (figure 2A). La colonne est ainsi soumise à un pilonnement du à l'action de houle sur les pontons, la bouée flottante suivant l'amplitude de la houle.

Après connexion au réseau du système de production d'électricité de la colonne, le mouvement de la bouée (décrit précédemment) produit une énergie directement proportionnelle à l'amplitude différentielle du mouvement de la colonne par rapport à celui de la bouée. Une tension d'ancrage est ensuite appliquée pour annuler le pilonnement de la colonne, le rendement énergétique de la bouée flottante étant alors maximal.

En fonction de la marée et de la variation de la hauteur significative de la houle, un ajustement du ballastage des pontons et un ajustement de la tension d'ancrage est automatiquement réalisé pour que le mouvement de la bouée flottante reste entre les guidages 26, 30 et pour éventuellement corriger l'assiette de la colonne en fonction des courants marins et de la variation des charges. De même, en fonction de la hauteur significative de la houle, un ajustement du poids de la bouée par ballastage de celle-ci pourra être requis pour optimiser le rendement énergétique de la colonne.

Enfin, lorsque la hauteur significative de la houle atteint la limite de capacité de la colonne, celle-ci est mise en position de sécurité par déballastage et par augmentation de la longueur d'ancrage de façon à mettre la salle des machines et la bouée flottante hors d'atteinte des vagues.

## Revendications

1. Colonne flottante semi-submersible (2; 2'; 2") pour le support d'un équipement de récupération et de transformation du potentiel énergétique de la houle, comprenant :
une structure en treillis (4) en partie immergée et destinée à être ancrée au niveau d'une extrémité inférieure sur le fond marin (6) par l'intermédiaire d'un ancrage tendu (8) ajustable en profondeur ;
des pontons (10) immergés et fixés à la structure en treillis, les pontons comportant des ballasts (12) ;
une salle des machines (14) montée à une extrémité supérieure de la structure en treillis en étant maintenue au-dessus de la surface de la mer, la salle des machines renfermant des moyens de ballastage et de déballastage (18) des ballasts des pontons et des moyens de pilotage dynamique (16) de l'ancrage de la structure en treillis ; et
un équipement de transformation du potentiel énergétique (20 ; 32 ; 36, 38) de la houle monté sur la structure en treillis.

2. Colonne selon la revendication 1, dans laquelle les pontons (10) immergés présentent une forme profilée de façon à réduire l'action de la houle sur les pontons de la structure en treillis.

3. Colonne selon l'une des revendications 1 et 2, dans laquelle la structure en treillis (4) comprend un assemblage de poutres (4a, 4b) formant un treillis.

4. Colonne selon l'une quelconque des revendications 1 à 3, dans laquelle l'ancrage (8) comprend des chaînes, des câbles ou des tubes de façon à former une ligne d'ancrage tendue de manière gravitaire ou ancrée dans le fond marin.

5. Colonne selon l'une quelconque des revendications 1 à 4, dans laquelle la salle des machines (14) renferme en outre un système de conversion électrique, des pompes de transfert, des groupes électriques de secours et des équipements de sécurité et de survie.

6. Colonne selon l'une quelconque des revendications 1 à 5, dans laquelle l'équipement de récupération et de transformation du potentiel énergétique de la houle comprend une bouée flottante (20) guidée verticalement en un mouvement alternatif de va-et-vient sous l'effet de la houle, la bouée entraînant dans son déplacement une pompe à vérin (22).

7. Colonne selon la revendication 6, dans laquelle la pompe à vérin (22) est positionnée à l'intérieur de la salle des machines et comprend une tige (24) solidaire de la bouée flottante, ladite bouée flottante étant solidaire d'une autre tige (28) apte à coulisser verticalement au travers d'un guidage inférieur (30) fixé sur la structure en treillis.

8. Colonne selon l'une quelconque des revendications 1 à 5, dans laquelle l'équipement de récupération et de transformation du potentiel énergétique de la houle comprend au moins une turbine à air (32) positionnée à l'intérieur de la salle des machines et ayant une entrée d'air (32a) qui s'ouvre sous la salle des machines, et une jupe (34) fixée sous la salle des machines et s'étendant verticalement sous celle-ci sur une hauteur correspondant sensiblement à la hauteur significative (h) de la houle.

9. Colonne selon l'une quelconque des revendications 1 à 5, dans laquelle l'équipement de récupération et de transformation du potentiel énergétique de la houle comprend au moins une hydrolienne (36, 38) immergée.

10. Procédé de pilotage d'une colonne flottante semi-submersible selon l'une quelconque des revendications 1 à 9, comprenant :
le positionnement vertical de l'équipement de récupération et de transformation du potentiel énergétique de la houle en fonction de la hauteur de la houle par l'ajustement en hauteur de la structure en treillis par rapport au fond marin, par l'activation des moyens de ballastage et de déballastage, et par ajustement de la longueur d'ancrage tendu pour supprimer le pilonnement de la colonne ; et
en cas de hauteur de houle trop importante, la mise en sécurité de la salle des machines par déballastage des ballasts des pontons.
